(19) Europäisches Patentamt
European Patent Office
Office européen des brevets

(11) EP 0 372 613 B1

(12) FASCICULE DE BREVET EUROPEEN

(45) Date de publication et mention de la délivrance du brevet: **07.02.1996 Bulletin 1996/06**

(51) Int Cl.⁶: **G06F 15/80**

(21) Numéro de dépôt: **89202979.4**

(22) Date de dépôt: **23.11.1989**

# (54) Procédé de rétropropagation d'erreurs et structure de réseau de neurones

Verfahren zur Rückführung von Fehlern und neuronale Netzstruktur

Process for the backpropagation of errors and neuronal network structure

(84) Etats contractants désignés:
**CH DE FR GB IT LI SE**

(30) Priorité: **25.11.1988 FR 8815428**

(43) Date de publication de la demande:
**13.06.1990 Bulletin 1990/24**

(73) Titulaires:
- **LABORATOIRES D'ELECTRONIQUE PHILIPS S.A.S.**
  **F-94450 Limeil-Brévannes (FR)**
  Etats contractants désignés:
  **FR**
- **Philips Electronics N.V.**
  **NL-5621 BA Eindhoven (NL)**
  Etats contractants désignés:
  **CH DE GB IT LI SE**

(72) Inventeur: **Sirat, Jacques-Ariel**
**Société Civile S.P.I.D.**
**F-75007 Paris (FR)**

(74) Mandataire: **Landousy, Christian et al**
**F-75008 Paris (FR)**

(56) Documents cités:
**WO-A-88/07234**

- **NEUTRAL NETWORKS, no. 1, supplément 1, 1988, page 399; J.J. PAULOS et al.: "A VLSI architecture for feedforward networks with integral back-propagation"**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1)Convention sur le brevet européen).

Printed by Jouve, 75001 PARIS (FR)

EP 0 372 613 B1

## Description

"PROCEDE DE RETROPROPAGATION D'ERREURS ET STRUCTURE DE RESEAU DE NEURONES"

L'invention concerne un procédé de rétropropagation d'erreurs mis en oeuvre dans une structure de réseau de neurones en couches munie de moyens de traitement, ces derniers opérant :

- des étapes de résolution pour déterminer pour chaque couche des états de neurones de sortie i à partir des états de neurones d'entrée j,
- des étapes de réactualisation de coefficients synaptiques Cij au cours d'étapes d'apprentissage opérées sur des exemples,

le procédé mettant en oeuvre deux groupements de moyens de traitement.

L'invention trouve son application dans les problèmes de classification, de reconnaissance de forme, de caractères, le traitement du signal de la parole, le traitement d'images, de compression de l'information ...

Les neurones sont des automates élémentaires non-linéaires connectés entre eux en un réseau très dense. On considère deux types de réseaux :

- les réseaux pleinement connectés dits de Hopfield
- les réseaux en couches : les neurones sont regroupés en couches successives, chaque neurone est connecté à tous les neurones de la couche suivante l'information passant de la couche d'entrée aux couches suivantes (couches cachées) jusqu'à la couche de sortie.

Ces systèmes sont ainsi capables d'apprendre par l'exemple ou de s'auto-organiser. Les temps de calcul très longs sur ordinateur séquentiel peuvent se réduire considérablement en parallélisant les opérations intervenant dans la phase d'apprentissage ou de résolution.

Les algorithmes d'apprentissage se répartissent en deux classes :

- apprentissages locaux, où la modification d'un coefficient synaptique $C_{ij}$ reliant le neurone d'entrée j au neurone de sortie i ne dépend que de l'information localisée sur les neurones i et j,
- les apprentissages non-locaux, où elle dépend d'informations situées dans tout le réseau. Ce dernier apprentissage est par exemple celui de la rétropropagation de l'erreur dans des réseaux en couches et c'est ce qui concerne la présente invention.

On connaît un procédé et une structure de ce genre du document "A VLSI Architecture for feedforward networks with integral back-propagation" J.J. PAULOS and P.W. HOLLIS, Neural Networks, N° 1, supplement 1, p. 399 , 1988. Il s'agit d'un circuit analogique/numérique qui comporte deux sous-réseaux, l'étape de résolution étant effectuée dans le premier sous-réseau et l'étape de rétropropagation étant effectuée dans le second sous-réseau. Il comporte également une unité de calcul (ALU) pour la mise à jour des coefficients. Les deux premières étapes sont parallélisées et la mise à jour est faite séquentiellement. La duplication de matériel pour les étapes de résolution et de rétropropagation permet de les paralléliser et ainsi de gagner un facteur de l'ordre de $N_k$ sur le temps d'exécution (où $N_k$ est le nombre de neurones de la couche k). Mais la mise à jour des coefficients qui reste séquentielle nécessite un temps proportionnel à $N_k.N_{k+1}$ (entrée/sortie).

Le problème posé par l'invention est donc d'accroître la vitesse de traitement d'une telle structure en limitant les échanges entre les moyens de traitement et l'automate de traitement.

Pour cela l'invention concerne un procédé de rétropropagation d'erreurs mis en oeuvre dans une structure de réseau de neurones en couches munie de moyens de traitement, ces derniers opérant :

- des étapes de résolution pour déterminer pour chaque couche des états de neurones de sortie i à partir des états de neurones d'entrée j,
- des étapes de réactualisation de coefficients synaptiques Cij au cours d'étapes d'apprentissage opérées sur des exemples,

le procédé mettant en oeuvre deux groupements de moyens de traitement au cours :

- d'étapes de résolution opérées dans le premier groupement
- et d'étapes d'apprentissage opérées sur des exemples mettant en oeuvre l'algorithme de rétropropagation d'erreurs opérées dans le second groupement :

- avec étape de résolution opérée sur chaque exemple puis
- comparaison, dans les moyens de traitement, de l'état obtenu et de l'état désiré pour chaque neurone de sortie i de la dernière couche K puis détermination de l'erreur $\delta i^K$ entre ces deux états,
- rétropropagation de toutes les erreurs $\delta i^K$ dans le second groupement,

pour déterminer les erreurs δi de chaque neurone de chaque couche puis calcul et mise à jour des coefficients synaptiques dans les deux groupements,
caractérisé en ce que les erreurs finales δi, propagées dans le second groupement à l'issue de l'étape de rétropropagation des erreurs, et respectivement les états d'entrée Vj du premier groupement, sont traités par les moyens de traitement pour déterminer respectivement des incréments Δi et Dj qui sont transmis respectivement au premier groupement et au deuxième groupement, après la présentation d'au moins un exemple, pour corriger et mettre à jour en parallèle respectivement la matrice de coefficients synaptiques $C_{ij}$ chargée dans le premier groupement et la matrice de coefficients synaptiques $T_{ji}$ transposée de la matrice $C_{ij}$ (avec $T_{ij}=C_{ij}$) chargée dans le deuxième groupement, ceci étant effectué pour chaque couche dans le premier groupement selon

$$Cij\ (nouveau) = Cij\ (ancien) + \Delta i.Vj$$

et pour chaque couche dans le second groupement selon

$$Tji\ (nouveau) = Tji\ (ancien) + Dj.\delta i$$

le parallélisme étant opéré soit sur l'indice i, soit sur l'indice j, soit sur les indices i et j
où Δi est un incrément, relatif à chaque neurone d'indice i, incrément qui est lié aux états des neurones du second groupement constitués par les erreurs $\delta_i$, selon la relation $\Delta_i=\eta\cdot\delta_i$ ou η est un facteur de gain,

où Dj est un incrément relatif à chaque neurone d'indice j, incrément qui est lié aux états $V_j$ des neurones du premier groupement, selon la relation $D_j = \eta\cdot V_j$,

où Vj sont les composantes d'un vecteur de correction qui sont les états des neurones d'entrée j du premier groupement, et où δi sont les composantes d'un vecteur de correction qui dépend des états des neurones d'entrée du deuxième groupement.

En outre pour la mise à jour des coefficients synaptiques utilisés dans l'un ou l'autre groupement le procédé peut tenir compte d'un terme dit de moment qui tient compte non seulement de la valeur du coefficient synaptique considéré à l'instant de la mise à jour mais également de sa valeur antérieure. Dans ce cas pour chaque coefficient synaptique la mise à jour tient compte de la différence entre les deux dernières valeurs de ce même coefficient synaptique. Pour tenir compte de cette différence on peut par exemple la multiplier par un taux de correction α pour effectuer alors la correction telle que :

$$C_{ij}(t+1) = C_{ij}(t)+\Delta_i.V_j+\alpha(C_{ij}(t)-C_{ij}(t-1)).$$

Ce procédé peut être mis en oeuvre dans une structure de réseaux de neurones en couches selon la revendication 5, caractérisée en ce que les moyens de réactualisation des coefficients synaptiques calculent puis mettent à jour en parallèle les coefficients synaptiques $C_{ij}$ et $T_{ji}$ stockés respectivement dans les deux groupements à partir d'incréments Δi et Dj qui leur sont respectivement transmis par l'automate de traitement, tel que les opérations de réactualisation sont effectuées dans le premier groupement selon

$$C_{ij}(nouveau) = C_{ij}(ancien) + \Delta i.Vj$$

et dans le second groupement selon

$$T_{ji}(nouveau) = T_{ji}(ancien) + Dj.\delta i$$

avec un parallélisme soit sur i, soit sur j, soit sur i et j.

Ainsi pour un neurone donné i, le premier groupement ne reçoit que l'incrément Δi qui est valable pour tous les coefficients synaptiques $C_{ij}$ relatifs à ce neurone i. Le calcul des nouveaux coefficients synaptiques $C_{ij}$ est donc effectué dans les moyens de traitement du premier groupement eux-mêmes en parallèle sur l'indice j et la mise à jour est effectuée également en parallèle sur j.

Simultanément un mécanisme analogue s'opère dans le deuxième groupement qui reçoit l'incrément Dj qui est valable pour tous les coefficients synaptiques $T_{ji}$ relatifs à ce neurone j. Le calcul des nouveaux coefficients synaptiques $T_{ji}$ est donc effectué dans les moyens de traitement du deuxième groupement en parallèle sur l'indice i et la mise à jour est effectuée également en parallèle sur i. Il est possible d'inverser les parallélismes i et j voire de les effectuer simultanément sur les indices i et j.

Evidemment les deux groupements opèrent en parallèle pour ces réactualisations ce qui confère à la structure une grande vitesse de traitement. Il est possible de réaliser un groupement de plusieurs structures pour accroître le nombre

de neurones ou la précision des coefficients synaptiques.

Les moyens de traitement sont fondamentalement constitués de :

- une mémoire de coefficients synaptiques $C_{ij}$ (respectivement $T_{ji}$)
- une mémoire d'états de neurones
- des moyens de résolution pour déterminer les états de i neurones de sortie à partir des états de j neurones d'entrée au cours de phases de résolution,
- des moyens de réactualisation pour mettre à jour les coefficients synaptiques $C_{ij}$ au cours de phases d'apprentissage,
- et des moyens d'interface pour connecter les moyens de traitement à l'automate de traitement.

Le procédé va donc mettre en oeuvre successivement :

- un mécanisme de résolution
- un mécanisme d'apprentissage par rétropropagation des erreurs :
  - avec comparaison, dans l'automate de traitement, de l'état obtenu et de l'état désiré pour chaque neurone de sortie i de la dernière couche K après l'étape de résolution puis détermination de l'erreur $\delta i^K$ entre ces deux états,
  - rétropropagation des erreurs $\delta i^K$ dans le second groupement
  - mise à jour des coefficients synaptiques simultanément dans les deux groupements.

Le mécanisme de résolution va consister à déterminer les états de i neurones de sortie à partir de j neurones d'entrée sur un trajet passant par K couches successives avec une propagation vers l'avant. Ainsi le neurone j de la couche k (k compris entre 1 et K) transmet son état $V_j^k$ au neurone i de la couche k+1 pondéré par le coefficient synaptique $C_{ij}^k$ suivant l'expression :

$$V_i^{k+1} = f\left(\sum_{j=1}^{N} C_{ij}^k . V_j^k\right) \qquad (N=N_k)$$

où f est une fonction généralement non-linéaire.

Le mécanisme d'apprentissage va consister à déterminer une erreur $\delta_i^k$ entre les états obtenus et les états désirés et à faire se propager cette erreur en sens inverse du trajet précédent. Pour cela on présente à l'entrée du réseau un exemple à apprendre puis on effectue une étape de résolution. Sur la dernière couche K la sortie obtenue $\{V_i^K\}_i$ est comparée à la sortie désirée $\{\bar{V}_i^K\}_i$ pour calculer l'erreur

$$\delta_i^K = f_1[f^{-1}(V_i^K)].(\tilde{V}_i^K - V_i^K)$$

où $f^{-1}$ est la fonction précédente inverse et où $f_1$ est la dérivée de la fonction non-linéaire. Cette erreur est ensuite rétropropagée d'une couche à la couche précédente suivant l'expression :

$$\delta_j^{k-1} = f_1[f^{-1}(V_j^{k-1})].\sum_{i=1}^{N}(T_{ji}^{k-1}.\delta_i^k) \qquad (N=N_{k-1}).$$

Ce mécanisme de propagation de l'erreur s'effectue de la même manière que le mécanisme de détermination des états de neurones dans l'étape de résolution.

Le mécanisme de réactualisation va consister à tenir compte des résultats obtenus après la rétropropagation de l'erreur et à redéfinir des nouveaux coefficients synaptiques pour un nouveau cycle complet de ces trois mécanismes.

La mise à jour des coefficients s'effectue selon la règle :

$$C_{ij}^k(\text{nouveau}) = C_{ij}^k(\text{ancien}) + \eta.\delta_i^{k+1}.V_j^k$$

et

$$T_{ji}^k(\text{nouveau}) = T_{ji}^k(\text{ancien}) + \eta.\delta_i^{k+1}.V_j^k$$

où η est un facteur de gain. Ces étapes sont locales dans chaque moyen de traitement et propagent l'information vers

l'avant (résolution) ou vers l'arrière (rétropropagation de l'erreur), la mise à jour des coefficients utilise à la fois l'information amont et aval (quel que soit le sens de propagation). On peut alors envisager de paralléliser les différentes étapes (de la couche k à la couche k+1 ou inversement). Ceci est effectué selon l'invention en utilisant des moyens de traitement identiques qui permettent de paralléliser aussi bien sur les entrées (indice j) que sur les sorties (i) en chargeant la matrice transposée dans le second groupement. Ce mode de calcul permet d'effectuer l'étape de mise à jour de manière homogène pour les deux sens de propagation. Il suffit de prendre

$$\Delta_i^{k+1} = \eta.\delta_i^{k+1} \text{ et } D_j^k = \eta.V_j^k$$

Ces différents mécanismes vont se répartir entre les deux groupements et l'automate de traitement qui est par exemple un calculateur central (host computer en langue anglaise). Pour un réseau de neurones organisé en K couches successives de neurones, le premier groupement comprend K-1 moyens de traitement et le second groupement comprend K-2 moyens de traitement identiques aux précédents mais utilisés avec des informations différentes.

La manière dont les différentes étapes s'imbriquent les unes dans les autres est la suivante :

- dans le premier groupement :
  initialisation des coefficients synaptiques $C_{ij}$ dans les mémoires de coefficients synaptiques de tout le groupement,
- dans le second groupement :
  initialisation de la matrice $T_{ji}$ transposée de la matrice $C_{ij}$ dans les mémoires de coefficients synaptiques de tout le groupement.

Ces étapes d'initialisation sont faites une fois au début de l'utilisation du réseau de neurones.

- Dans le premier groupement :
  initialisation des états des j neurones d'entrée dans la mémoire d'état des moyens de traitement de la première couche,
- dans le premier groupement :
  détermination pour chaque couche de l'état de chaque neurone de sortie i à partir des états des neurones d'entrée j, les états de neurones de sortie d'un moyen de traitement devenant les états de neurones d'entrée du moyen de traitement suivant,
- dans l'automate de traitement :
  comparaison de l'état obtenu et de l'état désiré pour chaque neurone de sortie i de la dernière couche et détermination de l'erreur $\delta i$ entre ces deux états,
- dans le second groupement :
  introduction des erreurs $\delta i$ dans la mémoire d'états des moyens de traitement de la dernière couche,
- dans le second groupement :
  rétropropagation de l'erreur en allant des états de sortie de la dernière couche vers les états d'entrée de la première couche, en effectuant dans chaque moyen de traitement la détermination de l'état de chaque neurone de sortie j à partir des états des neurones d'entrée i, et multiplication dans l'automate de traitement de cet état de sortie par la valeur que prend la fonction dérivée de la fonction inverse non linéaire au point $V_j$ qui est l'état du neurone d'entrée j du moyen de traitement correspondant du premier groupement,
- dans l'automate de traitement :
  à partir des nouvelles valeurs de l'erreur contenues dans la mémoire d'états des moyens de traitement de la première couche, détermination d'incréments $\Delta_i^{k+1}$ et $D_j^k$ à appliquer simultanément aux coefficients synaptiques $C_{ij}$ et $T_{ij}$,
- dans le premier groupement :
  mise à jour des coefficients synaptiques Cij tel que :

$$C_{ij}^{k}(\text{nouveau}) = C_{ij}^{k}(\text{ancien}) + \Delta i^{k+1}.Vj^{k}$$

- dans le second groupement :
  mise à jour des coefficients synaptiques $T_{ji}$ simultanément avec la mise à jour précédente tel que

$$T_{ji}^{k}(\text{nouveau}) = T_{ji}^{k}(\text{ancien}) + Dj^{k}.\delta i^{k+1}.$$

.

Etant donné que l'étape de mise à jour se fait d'un bloc simultanément sur les deux groupements, que l'initialisation et l'incrémentation de $C_{ij}^{k}$ et $T_{ji}^{k}$ sont identiques, on est assuré qu'à chaque étape de résolution ou de rétropropagation les deux sous-ensembles utilisent les mêmes coefficients synaptiques. C'est encore valable si les $C_{ij}^{k}$ et $T_{ji}^{k}$ sont bornés pourvu que la règle aux bornes (saturation, modulo ou réflexion) soit la même sur les deux réseaux.

L'invention sera mieux comprise à l'aide des figures suivantes données à titre d'exemples non limitatifs qui représentent :

Figure 1 : un schéma général d'un système de réseau de neurones mettant en oeuvre le procédé selon l'invention,
Figures 2A, 2B : deux schémas indiquant la manière de réaliser les calculs respectivement en phase de résolution et en phase de rétropropagation du gradient
Figure 3 : un schéma d'un moyen de traitement pour la structure de réseau de neurones selon l'invention.

La figure 1 représente une structure de réseau de neurones munie de deux groupements de traitement 11, 12 et d'un automate de traitement 10. Le groupement de traitement 11 effectue la phase de résolution et le groupement de traitement 12 met en oeuvre la rétropropagation du gradient. Le groupement 11 contient des moyens de traitement $13_1$, $13_2$, $13_3$ reliés en série et placés entre K=4 couches de neurones (k=1, 2, 3, 4). Ces moyens de traitement stockent respectivement les coefficients synaptiques

$$C_{ij}^{1},\ C_{ij}^{2},\ C_{ij}^{3}.$$

Le groupement 12 contient des moyens de traitement $13_4$, $13_5$ reliés en série qui opèrent entre les couches k=4 et k=2. Ils stockent respectivement les coefficients synaptiques $T_{ji}^{3}$ et $T_{ji}^{2}$.

Le groupement 11 reçoit de l'automate central des états d'entrée $V_j^1$ qui sont introduits dans le premier moyen de traitement $13_1$, les états de sortie du premier moyen $13_1$ vont en entrée du second moyen $13_2$. Lors de la phase de résolution, il apparaît en sortie des trois moyens de traitement des états calculés

$$V_i^k$$

qui sont délivrés à l'automate central 10. Ce dernier compare les états obtenus

$$V_i^4$$

en sortie du dernier moyen $13_3$ avec les états désirés du modèle présenté en entrée et l'écart observé se traduit par une erreur

$$\delta_i^4$$

propre à chaque neurone de sortie i de la couche 4. L'automate central 10 introduit cette erreur

$$\delta_i^4$$

dans le moyen de traitement $13_4$ du second groupement. Les résultats obtenus

$$\sum_{i=1}^{N_4} T_{ji}^4 \cdot \delta_i^4$$

sur la couche 3 sont fournis à l'automate central (connexion 14) qui les multiplie respectivement par :

$$f_1[f^{-1}(V_j^3)].$$

Ces produits constituent les $\delta_i^3$ qui sont introduits en entrée du moyen $13_5$. Celui-ci calcule ensuite :

$$\sum_{i=1}^{N_3} T_{ji}^3 \cdot \delta_i^3$$

qu'il délivre à l'automate central 10 qui détermine les $\delta_1^2$. Lorsqu'il y a un plus grand nombre de couches que dans cet exemple limité, les opérations s'effectuent de cette manière pour toutes les couches.

L'automate central 10 détermine alors les incréments

$$\Delta_i^{k+1} = \eta.\delta_i^{k+1} \text{ et } D_j^k = \eta.V_j^k$$

qui sont introduits dans les moyens de traitement du premier groupement 11 tel que :

. Le groupement $13_1$ reçoit 1 $\Delta_i^2$

. Le groupement $13_2$ reçoit $\Delta_i^3$

. Le groupement $13_3$ reçoit $\Delta_i^4$

et du second groupement 12 tel que :

. Le groupement $13_4$ reçoit $D_j^3$

. Le groupement $13_5$ reçoit $D_j^2$

pour effectuer la mise à jour des coefficients synaptiques $C_{ij}^k$ et $T_{ji}^k$. Cette mise à jour s'opère en parallèle sur j dans le premier groupement qui effectue la résolution et s'opère en parallèle sur i dans le deuxième groupement qui effectue la rétropropagation.

La figure 2A indique comment les données sont traitées dans le premier groupement au cours de l'étape de résolution. La figure 2B indique comment les données sont traitées dans le deuxième groupement au cours de l'étape de rétropropagation du gradient.

Sur la figure 2A est représentée une partie du calcul qui est effectué entre la couche 2 et la couche 3 dans le moyen de traitement $13_2$ pour déterminer l'état du neurone de sortie i=3 de la couche k=3.

Les coefficients synaptiques de la couche 2 sont $C_{31}^2$, $C_{32}^2$ $C_{33}^2$, $C_{34}^2$ et le calcul opéré est

$$\sum_{j=1}^{4} C_{3j}^2 . V_j^2 .$$

Ce calcul se déroule de la même manière pour tous les neurones de toutes les couches en allant de la couche k=1 vers la couche k=4.

Sur la même figure est représenté l'incrément $\Delta_3^3 = \eta \ . \ \delta_3^3$ qui sert à la mise à jour simultanée des coefficients synaptiques $C_{3j}^2$.

La figure 2B représente une partie du calcul pour la rétropropagation du gradient qui se déroule de la couche k=4 vers la couche k=3 dans le moyen de traitement $13_4$. Les erreurs $\delta_1^4$, $\delta_2^4$, $\delta_3^4$ sont multipliées respectivement par les coefficients synaptiques $T_{21}^3$, $T_{22}^3$, $T_{23}^3$ pour fournir pour le neurone j=2 le résultat

$$\sum_{i=1}^{3} T_{2i}^3 \ \delta_i^4$$

Ce calcul se déroule de la même manière pour tous les neurones de toutes les couches à l'exception de la couche k=1 dont le résultat est inopérant sur le résultat final. Sur la même figure est représenté l'incrément $D_2^3 = \eta \ . \ V_2^3$ qui sert à la mise à jour simultanée des coefficient synaptiques $T_{2i}^3$.

La figure 3 représente un moyen de traitement 13 permettant d'effectuer la phase de résolution ainsi que la phase

d'apprentissage y compris la détermination et la mise à jour des coefficients synaptiques. Une mémoire 30 stocke les coefficients synaptiques. Un registre d'état 31 reçoit les états de neurones d'entrée j soit de l'automate central 10 soit de l'extérieur. Une unité de calcul 32 reçoit les coefficients synaptiques $C_{ij}$ (bus 38) et les états Vj et opère les calculs $\Sigma\ C_{ij}.Vj$. L'unité de calcul peut comprendre également des moyens pour appliquer une fonction non-linéaire à la somme précédente. Les résultats sont de nouveaux états de neurones i stockés dans le registre 33. Les éléments précédents font partie de la structure habituelle d'un réseau de neurones. Selon l'invention on ajoute des multiplieurs $34_1$... $34_N$ (avec $N=N_k$) qui multiplient un incrément $\Delta_i^{k+1}$, qui peut être stocké dans un registre 35, par un vecteur Sj qui peut être soit stocké dans un registre 36 en provenance de l'automate externe soit être constitué par les états Vj du registre 31. Le résultat de chaque multiplication sert à corriger les coefficients synaptiques Cij à l'aide d'additionneurs $37_1$ ... $37_N$ qui sont reliés à la mémoire 30 par un bus bidirectionnel 38. Le registre 36 est supprimé lorsque les données Sj sont les vecteurs Vj qui sont stockés dans le registre 31. Le registre 36 sert lorsque les données Sj proviennent de l'automate central.Les groupements 11 et 12 de la figure 1 utilisent les mêmes moyens de traitement 13 qui viennent d'être décrits mais les données qui y sont traitées sont différentes. Dans le groupement 11 les registres 35 reçoivent les incréments $\Delta i$ qui sont multipliés par des états de neurones venant soit du registre 36 soit directement du registre 31. Dans le groupement 12 les registres 35 reçoivent les incréments Dj qui sont multipliés par les erreurs $\delta i$ stockées dans les registres 36 de chaque moyen de traitement 13.

Ainsi les moyens de réactualisation comprennent ::

- N opérateurs de calcul qui déterminent les produits $\Delta i.Vj$. (respectivement $D_j.\delta_i$),
- N additionneurs qui calculent les nouveaux coefficients synaptiques qui sont réactualisés dans la mémoire à l'aide d'un bus bidirectionnel.

Pour réduire le matériel utilisé les N opérateurs de calcul de chaque groupement peuvent également servir à déterminer respectivement les produits $C_{ij}.V_j$ et $T_{ji}.\delta_i$

Les étapes de résolution peuvent être mises en oeuvre dans le groupement 11 selon un parallélisme différent. Dans ces cas la mémoire 30 est adressable à la fois en lignes et en colonne. Ainsi la détermination de l'état de chaque neurone de sortie i à partir des états des neurones d'entrée j peut s'effectuer en opérant un traitement local effectué en parallèle sur tous les neurones d'entrée j dont les synapses convergent vers le neurone de sortie i.

De même la détermination de l'état de chaque neurone de sortie i à partir des états des neurones d'entrée j peut s'effectuer en opérant un traitement en parallèle sur tous les neurones de sortie i dont les synapses partent du neurone d'entrée j.

De même la détermination de l'état de chaque neurone de sortie i à partir des états des neurones d'entrée j peut s'effectuer en opérant un traitement local effectué en parallèle sur tous les neurones d'entrée j dont les synapses convergent vers le neurone de sortie i et sur tous les neurones de sortie i dont les synapses partent du neurone d'entrée j.

Un parallélisme analogue peut être mis en oeuvre dans le second groupement.

Pour cela la détermination de chaque erreur de sortie $\delta_i$ à partir des erreurs d'entrée $\delta_j$ peut s'effectuer en opérant un traitement local effectué en parallèle sur tous les neurones contenant les erreurs d'entrée $\delta_j$ dont les synapses convergent vers le neurone contenant l'erreur de sortie $\delta_i$,

De même la détermination de chaque erreur de sortie $\delta_i$ à partir des erreurs d'entrée $\delta_j$ peut s'effectuer en opérant un traitement en parallèle sur tous les neurones contenant les erreurs de sortie $\delta_i$ dont les synapses partent du neurone contenant l'erreur d'entrée $\delta_j$.

De même la détermination de chaque erreur de sortie $\delta_i$ à partir des erreurs d'entrée $\delta_j$ peut s'effectuer en opérant un traitement local effectué en parallèle sur tous les neurones contenant les erreurs d'entrée $\delta_j$ dont les synapses convergent vers le neurone contenant l'erreur de sortie $\delta_i$ et sur tous les neurones contenant les erreurs de sortie $\delta_i$ dont les synapses partent du neurone contenant l'erreur d'entrée $\delta_j$.

## Revendications

1. Procédé de rétropropagation d'erreurs mis en oeuvre dans une structure de réseau de neurones en couches munie de moyens de traitement, ces derniers opérant :

   - des étapes de résolution pour déterminer pour chaque couche des états de neurones de sortie i à partir des états de neurones d'entrée j,
   - des étapes de réactualisation de coefficients synaptiques Cij au cours d'étapes d'apprentissage opérées sur des exemples,

le procédé mettant en oeuvre deux groupements de moyens de traitement au cours :

- d'étapes de résolution opérées dans le premier groupement
- et d'étapes d'apprentissage opérées sur des exemples mettant en oeuvre l'algorithme de rétropropagation d'erreurs opérées dans le second groupement :
    - avec étape de résolution opérée sur chaque exemple puis
    - comparaison, dans les moyens de traitement, de l'état obtenu et de l'état désiré pour chaque neurone de sortie i de la dernière couche K puis détermination de l'erreur $\delta i^K$ entre ces deux états,
    - rétropropagation de toutes les erreurs $\delta i^K$ dans le second groupement,

pour déterminer les erreurs δi de chaque neurone de chaque couche puis calcul et mise à jour des coefficients synaptiques dans les deux groupements,
caractérisé en ce que les erreurs finales δi, propagées dans le second groupement à l'issue de l'étape de rétropropagation des erreurs et respectivement les états d'entrée Vj du premier groupement, sont traités par les moyens de traitement pour déterminer respectivement des incréments Δi et Dj qui sont transmis respectivement au premier groupement et au deuxième groupement, après la présentation d'au moins un exemple, pour corriger et mettre à jour en parallèle respectivement la matrice de coefficients synaptiques $C_{ij}$ chargée dans le premier groupement et la matrice de coefficients synaptiques $T_{ji}$ transposée de la matrice $C_{ij}$ (avec $T_{ij}=C_{ij}$)
chargée dans le deuxième groupement, ceci étant effectué pour chaque couche dans le premier groupement selon

$$Cij\ (nouveau) = Cij\ (ancien) + \Delta i.Vj$$

et pour chaque couche dans le second groupement selon

$$Tji\ (nouveau) = Tji\ (ancien) + Dj.\delta i$$

le parallélisme étant opéré soit sur l'indice i, soit sur l'indice j, soit sur les indices i et j
où Δi est un incrément, relatif à chaque neurone d'indice i, incrément qui est lié aux états des neurones du second groupement constitués par les erreurs $\delta_i$, selon la relation $\Delta_i = \eta\delta_i$, ou η est un facteur de gain, où Dj est un incrément relatif à chaque neurone d'indice j, incrément qui est lié aux états $V_j$ des neurones du premier groupement, selon la relation $D_j = \eta V_j$, où Vj sont les composantes d'un vecteur de correction qui sont les états des neurones d'entrée j du premier groupement, qui et où δi sont les composantes d'un vecteur de correction qui dépend des états des neurones d'entrée du deuxième groupement.

**2.** Procédé de rétropropagation d'erreurs selon la revendication 1 caractérisé en ce que la mise à jour d'un quelconque coefficient synaptique tient également compte de la différence entre les deux dernières valeurs de ce même coefficient synaptique.

**3.** Procédé selon une des revendications 1 ou 2, caractérisé en ce que dans chaque moyen de traitement du premier groupement, la détermination de l'état de chaque neurone de sortie i à partir des états des neurones d'entrée j s'effectue en opérant un traitement local effectué en parallèle soit sur tous les neurones d'entrée j, soit sur tous les neurones de sortie i, soit sur tous les neurones d'entrée j et de sortie i.

**4.** Procédé selon une des revendications 1 à 3, caractérisé en ce que dans chaque moyen de traitement du second groupement, la détermination de chaque erreur δi d'une couche de sortie i à partir des erreurs δj d'une couche d'entrée s'effectue en opérant un traitement local effectué en parallèle soit sur l'indice i, soit sur l'indice j, soit sur les indices i et j.

**5.** Structure de réseau de neurones munie d'un automate de traitement et de deux groupements de moyens de traitement destinés à opérer sur des réseaux en couches :

- le premier groupement effectuant des phases de résolution à partir d'états de neurones j d'entrée et d'une matrice de coefficients synaptiques $C_{ij}$,
- et le second groupement mettant en oeuvre l'algorithme de rétropropagation d'erreurs à partir d'erreurs calculées et d'une matrice transposée de coefficients synaptiques $T_{ji}$, les deux groupements disposant de moyens de réactualisation des coefficients synaptiques mis en oeuvre au cours de phases d'apprentissage

caractérisée en ce que les moyens de réactualisation des coefficients synaptiques calculent puis mettent à jour en

parallèle les coefficients synaptiques $C_{ij}$ et $T_{ji}$ stockés respectivement dans les deux groupements à partir d'incréments $\Delta i$ et Dj qui leur sont respectivement transmis par l'automate de traitement, tel que les opérations de réactualisation sont effectuées dans le premier groupement selon

$$C_{ij}(\text{nouveau}) = C_{ij}(\text{ancien}) + \Delta i.Vj$$

et dans le second groupement selon

$$T_{ji}(\text{nouveau}) = T_{ji}(\text{ancien}) + Dj.\delta i$$

avec un parallélisme soit sur i, soit sur j, soit sur i et j,
où $\Delta i$ est un incrément, relatif à chaque neurone d'indice i, incrément qui est lié aux états des neurones du second groupement constituées par les erreurs $\delta i$, selon la relation $\Delta_i = \eta\ \delta_i$, ou $\eta$ est un facteur de gain,

où Dj est un incrément relatif à chaque neurone d'indice j, incrément qui est lié aux états Vj des neurones du premier groupement, selon la relation $D_j=\eta\ V_j$,

où Vj sont les composantes d'un vecteur de correction qui sont les états des neurones d'entrée j du premier groupement,
où $\delta i$ sont les composantes d'un vecteur de correction qui dépend des états des neurones d'entrée du deuxième groupement.

**6.** Structure selon la revendication 5, caractérisée en ce que les moyens de réactualisation de chaque groupement comprennent :

- N opérateurs de calcul qui déterminent les produits $\Delta i.Vj$ (respectivement $D_j.\delta i$),
- N additionneurs qui calculent les nouveaux coefficients synaptiques qui sont réactualisés dans la mémoire à l'aide d'un bus bidirectionnel.

**7.** Structure selon la revendication 6, caractérisée en ce que les N opérateurs de calcul de chaque groupement déterminent également respectivement les produits $C_{ij}.V_j$ et $T_{ji}.\delta_i$.

**Patentansprüche**

**1.** Verfahren zur Fehlerrückführung in einer Struktur geschichteter neuronaler Netze, die mit Verarbeitungsmitteln versehen ist, wobei letztere folgende Schritte ausführen:

- Lösungsschritte, um für jede Schicht Zustände von Ausgangsneuronen i auf der Basis von Zuständen von Eingangsneuronen j zu bestimmen,
- Schritte zum Wiederauffrischen von synaptischen Koeffizienten $C_{ij}$ im Verlauf von an Beispielen ausgeführten Lernschritten,

wobei das Verfahren zwei Gruppen von Verarbeitungsmitteln einsetzt im Verlauf von:

- in der ersten Gruppe ausgeführten Lösungsschritten
- und an Beispielen ausgeführten Lernschritten, die den in der zweiten Gruppe ausgeführten Algorithmus der Fehlerrückführung einsetzen:
  - mit einem an jedem Beispiel ausgeführten Lösungsschritt und dann
  - Vergleich des erhaltenen Zustandes und des gewünschten Zustandes für jedes Ausgangsneuron i der letzten Schicht K in den Verarbeitungsmitteln und dann Bestimmung des Fehlers $\delta i^K$ zwischen diesen beiden Zuständen,
  - Rückführung aller Fehler $\delta i^K$ in der zweiten Gruppe,

zum Bestimmen der Fehler $\delta i$ jedes Neurons jeder Schicht, und dann Berechnung und Aktualisierung der synaptischen Koeffizienten in den beiden Gruppen,
dadurch gekennzeichnet, daß die Endfehler $\delta i$, die sich in der zweiten Gruppe am Ende des Fehlerrückführungsschrittes fortpflanzen, und jeweils die Eingangszustände Vj der ersten Gruppe von den Verarbeitungsmitteln bear-

beitet werden, um Inkremente $\Delta i$ bzw. Dj zu bestimmen, die der ersten Gruppe bzw. der zweiten Gruppe nach der Präsentation mindestens eines Beispiels übermittelt werden, um die in die erste Gruppe geladene Matrix aus synaptischen Koeffizienten $C_{ij}$ bzw. die aus der Matrix $C_{ij}$ transponierten, in die zweite Gruppe geladene Matrix aus synaptischen Koeffizienten $T_{ji}$ (mit $T_{ij} = C_{ij}$) parallel zu korrigieren und zu aktualisieren, was für jede Schicht in der ersten Gruppe nach

$$C_{ij}(\text{neu}) = C_{ij}(\text{alt}) + \Delta i \cdot Vj$$

erfolgt, und für jede Schicht in der zweiten Gruppe nach

$$T_{ji}(\text{neu}) = T_{ji}(\text{alt}) + Dj \cdot \delta i,$$

wobei die parallele Ausführung entweder für den Index i, oder den Index j, oder die Indizes i und j erfolgt,
wobei $\Delta i$ ein Inkrement bezüglich jedes Neurons vom Index i ist und mit den von den Fehlern $\delta_i$ gebildeten Neuronenzuständen der zweiten Gruppe zusammenhängt, entsprechend der Beziehung $\Delta_i = \eta . \delta_i$, wobei $\eta$ ein Verstärkungsfaktor ist,
wobei Dj ein Inkrement bezüglich jedes Neurons vom Index j ist und mit den Zuständen $V_j$ der Neuronen der ersten Gruppe zusammenhängt, entsprechend der Beziehung $D_j = \eta \cdot V_j$,
wobei $V_j$ die Komponenten eines Korrekturvektors sind, die die Zustände von Eingangsneuronen j der ersten Gruppe sind
und wobei $\delta i$ die Komponenten eines Korrekturvektors sind, der von den Eingangsneuronenzuständen der zweiten Gruppe abhängt.

**2.** Verfahren zur Fehlerrückführung nach Anspruch 1, dadurch gekennzeichnet, daß die Aktualisierung eines beliebigen synaptischen Koeffizienten auch die Differenz zwischen den beiden letzten Werten dieses gleichen synaptischen Koeffizienten berücksichtigt.

**3.** Verfahren zur Fehlerrücktührung nach Anspruch 1 oder 2, dadurch gekennzeichnet, daß in jedem Verarbeitungsmittel der ersten Gruppe die Bestimmung des Zustandes jedes Ausgangsneurons i auf Basis der Zustände der Eingangsneuronen j durch Ausführen einer lokalen Verarbeitung erfolgt, die parallel entweder an allen Eingangsneuronen j oder an allen Ausgangsneuronen i oder an allen Eingangsneuronen j und Ausgangsneuronen i erfolgt.

**4.** Verfahren zur Fehlerrückführung nach einem der Ansprüche 1 bis 3, dadurch gekennzeichnet, daß in jedem Verarbeitungsmittel der zweiten Gruppe die Bestimmung jedes Fehlers $\delta i$ einer Ausgangsschicht i auf Basis von Fehlern $\delta j$ einer Eingangsschicht erfolgt, indem eine lokale Verarbeitung parallel entweder per Index i oder per Index j oder per Indizes i und j ausgeführt wird.

**5.** Struktur neuronaler Netze mit einem Verarbeitungsautomaten und zwei Gruppen Verarbeitungsmitteln zur Bearbeitung geschichteter Netze:

- wobei die erste Gruppe Lösungsphasen auf der Basis von Zuständen von Eingangsneuronen j und einer Matrix synaptischer Koeffizienten $C_{ij}$ ausführt,
- und die zweite Gruppe den Algorithmus der Fehlerrückführung auf Basis berechneter Fehler und einer transponierten Matrix synaptischer Koeffizienten $T_{ji}$ ausführt, wobei beide Gruppen über Mittel zur Wiederauffrischung der im Verlauf von Lernphasen eingesetzten synaptischen Koeffizienten verfügen,

dadurch gekennzeichnet, daß die Mittel zur Wiederauffrischung der synaptischen Koeffizienten die in den beiden Gruppen gespeicherten synaptischen Koeffizienten $C_{ij}$ bzw, $T_{ij}$, auf Basis von Inkrementen $\Delta i$ und Dj, die ihnen vom Verarbeitungsautomaten jeweils übermittelt wurden, parallel berechnen und dann aktualisieren, so daß die Wiederauffrischungsoperationen in der ersten Gruppe erfolgen nach

$$C_{ij}(\text{neu}) = C_{ij}(\text{alt}) + \Delta i \cdot Vj$$

und in der zweiten Gruppe nach

$$T_{ji}(\text{neu}) = T_{ji}(\text{alt}) + Dj \cdot \delta i,$$

mit einer parallelen Ausführung entweder für i, oder j, oder und j, wobei $\Delta i$ ein Inkrement bezüglich jedes Neurons vom Index i ist und mit den von den Fehlern $\delta_i$ gebildeten Neuronenzuständen der zweiten Gruppe zusammenhängt,

entsprechend der Beziehung $\Delta_i = \eta . \delta_i$, wobei $\eta$ ein Verstärkungsfaktor ist,

wobei Dj ein Inkrement bezüglich jedes Neurons vom Index j ist und mit den Zuständen $V_j$ der Neuronen der ersten Gruppe zusammenhängt, entsprechend der Beziehung $D_j = \eta \cdot V_j$,

wobei $V_j$ die Komponenten eines Korrekturvektors sind, die die Zustände von Eingangsneuronen j der ersten Gruppe sind,
wobei $\delta i$ die Komponenten eines Korrekturvektors sind, der von den Eingangsneuronenzuständen der zweiten Gruppe abhängt.

**6.** Struktur nach Anspruch 5, dadurch gekennzeichnet, daß die Wiederauffrischungsmittel jeder Gruppe umfassen:

- N Rechenoperatoren, die die Produkte $\Delta i \cdot V_j$ (bzw. $D_j \cdot \delta i$) bestimmen,
- N Addierer, die die neuen synaptischen Koeffizienten berechnen, die in dem Speicher mit Hilfe eines bidirektionalen Busses wiederaufgefrischt worden sind.

**7.** Struktur nach Anspruch 6, dadurch gekennzeichnet, daß die N Rechenoperatoren jeder Gruppe auch die Produkte $C_{ij} \cdot V_j$ bzw. $T_{ji} \cdot \delta i$ bestimmen.

## Claims

**1.** An error backpropagation method performed in a layered neural network structure comprising processing means which perform:

- resolving steps for determining states of output neurons i for each layer on the basis of the states of input neurons j,
- steps for updating synaptic coefficients $C_{ij}$ in the course of learning steps performed on examples,

said method utilizing two groups of processing means during:

- resolving steps performed in the first group,
- and learning steps performed on examples utilizing the error backpropagation algorithm executed in the second group:
    - with a resolving step executed on each example, and then
    - comparison, in the processing means, of the state obtained and the state desired for each output neuron i of the last layer K, followed by determination of the error $\delta i^K$ between these two states,
    - backpropagation of all errors $\delta i^K$ in the second group,

in order to determine the errors $\delta i$ of each neuron of each layer, followed by calculation and updating of the synaptic coefficients in the two groups,
characterized in that the final errors $\delta i$, propagated in the second group at the end of the error backpropagation step, and the input states Vj of the first group are processed by the processing means in order to determine increments $\Delta i$ and Dj, respectively, which are applied to the first group and to the second group, respectively, after the presentation of at least one example, for the correction and updating in parallel of the synaptic coefficient matrix $C_{ij}$, loaded into the first group, and the synaptic coefficient matrix $T_{ji}$, being the transposed matrix $C_{ij}$ (where $T_{ji} = C_{ij}$) loaded into the second group, which operation is performed for each layer in the first group in such a manner that

$$C_{ij}(\text{new}) = C_{ij}(\text{old}) + \Delta i . Vj$$

and for each layer in the second group in such a manner that

$$T_{ji}(\text{new}) = T_{ji}(\text{old}) + Dj . \delta i,$$

the parallel execution being performed either on the index i, or on the index j, or on the indices i and j,
where $\Delta i$ is an increment which relates to each neuron of index i and which is linked to the states of neurons of the second group formed by the errors $\delta_i$, in conformity with the relation $\Delta_i = \eta . \delta_i$, where $\eta$ is a gain factor,

where Dj is an increment which relates to each neuron of index j and which is linked to the states $V_j$ of the neurons of the first group, in conformity with the relation $D_j = \eta . V_j$,

where $V_j$ are the components of a correction vector which are the states of input neurons j of the first group, and where δi are the components of a correction vector which depends on the states of input neurons of the second group.

**2.** An error backpropagation method as claimed in Claim 1, characterized in that the updating of an arbitrary synaptic coefficient also takes into account the difference between the last two values of the relevant synaptic coefficient.

**3.** A method as claimed in one of the Claims 1 or 2, characterized in that in each processing means of the first group the determination of the state of each output neuron i on the basis of states of input neurons j is realised by performing a local operation in parallel either on all input neurons j, or on all output neurons i, or on all input neurons j and all output neurons i.

**4.** A method as claimed in any one of the Claims 1 to 3, characterized in that in each processing means of the second group the determination of each error δi of an output layer i on the basis of the errors δj of an input layer is performed by executing a local processing operation in parallel either on the index i, or on the index j, or on the indices i and j.

**5.** A neural network structure comprising an automatic processing device and two groups of processing means for operation in layered networks:

- the first group performing resolving phases on the basis of states of input neurons j and a synaptic coefficient matrix $C_{ij}$,
- and the second group executing the error backpropagation algorithm on the basis of calculated errors and a transposed synaptic coefficient matrix $T_{ji}$, the two groups comprising means for updating the synaptic coefficients utilized during learning phases, characterized in that the means for updating the synaptic coefficients calculate and subsequently update in parallel the synaptic coefficients $C_{ij}$ and $T_{ji}$, stored in the two groups, on the basis of increments Δi and Dj which are applied thereto by the automatic processing device, so that the updating operations are performed in the first group according to

$$C_{ij}(new) = C_{ij}(old) + \Delta i . Vj$$

and in the second group according to

$$T_{ji}(new) = T_{ji}(old) + Dj . \delta i$$

with parallel execution either on i, or on j, or on i and j,
where Δi is an increment which relates to each neuron of index i and which is linked to the states of neurons of the second group which are formed by the errors δi, in conformity with the relation $\Delta i = \eta . \delta_i$, where η is a gain factor,
where Dj is an increment which relates to each neuron of index j and which is linked to the states $V_j$ of neurons of the first group in conformity with the relation $D_j = \eta . V_j$,

where Vj are the components of a correction vector which are the states of input neurons j of the first group, where δi are the components of a correction vector which depends on the state of input neurons of the second group.

**6.** A structure as claimed in Claim 5, characterized in that the updating means of each group comprise:

- N calculation operators which determine the products Δi.Vj (or Dj.δi),
- N adders which calculate the new synaptic coefficients which are updated in the memory by means of a bidirectional bus.

**7.** A structure as claimed in Claim 6, characterized in that the N calculation operators of each group also determine the products $C_{ij} . V_j$ and $T_{ji} . \delta i$, respectively.

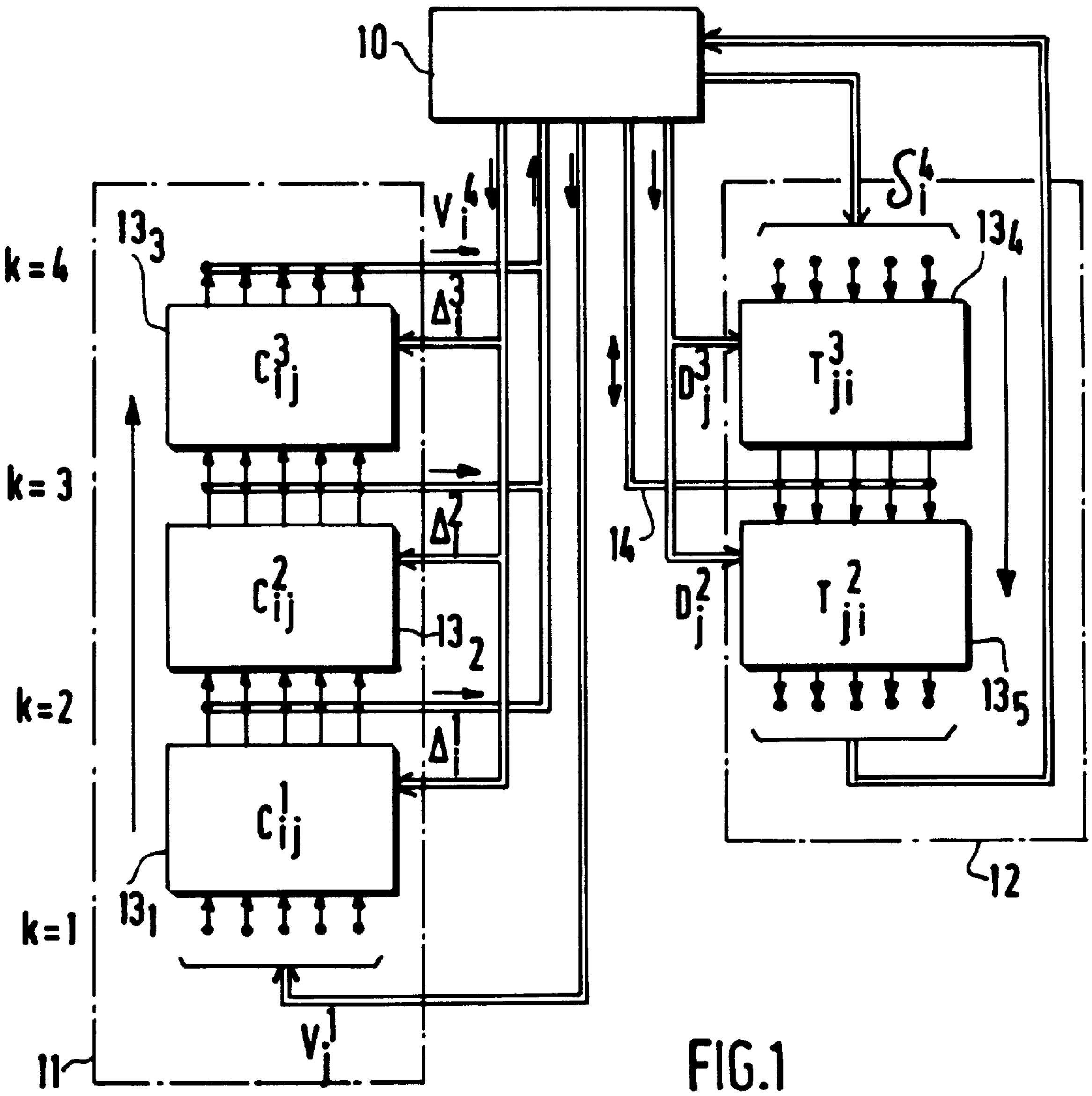
10
11
12
14
$13_1$
$13_2$
$13_3$
$13_4$
$13_5$
k=1
k=2
k=3
k=4
$C^1_{ij}$
$C^2_{ij}$
$C^3_{ij}$
$T^3_{ji}$
$T^2_{ji}$
$V^1_j$
$V^4_i$
$\Delta^1_i$
$\Delta^2_i$
$\Delta^3_i$
$D^3_j$
$D^2_j$
$\delta^4_i$

FIG.1

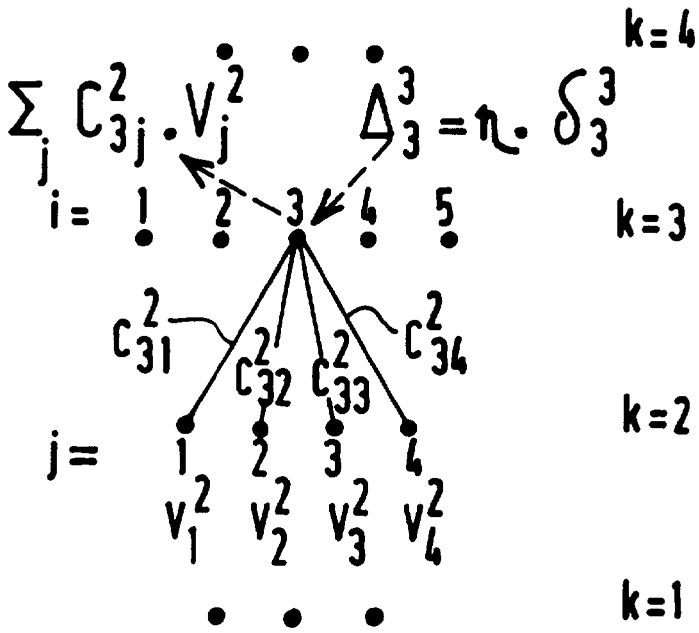
k=4
$\sum_j C_{3j}^2 \cdot V_j^2$
$\Delta_3^3 = \eta \cdot \delta_3^3$
i = 1 2 3 4 5
k=3
$C_{31}^2$
$C_{32}^2$
$C_{33}^2$
$C_{34}^2$
k=2
j = 1 2 3 4
$V_1^2$ $V_2^2$ $V_3^2$ $V_4^2$
k=1

FIG. 2A

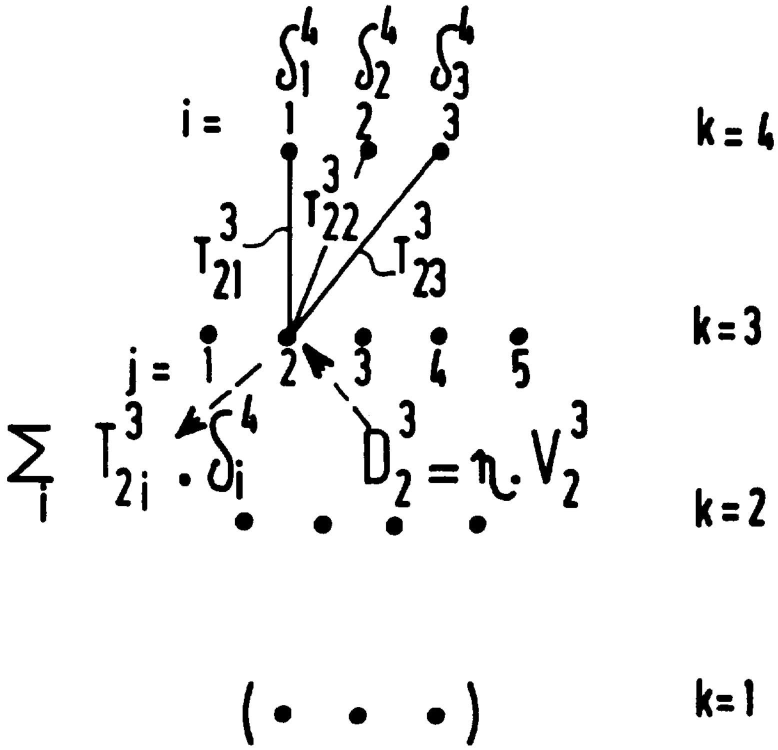
$\delta_1^4$ $\delta_2^4$ $\delta_3^4$
i = 1 2 3
k=4
$T_{21}^3$
$T_{22}^3$
$T_{23}^3$
k=3
j = 1 2 3 4 5
$\sum_i T_{2i}^3 \cdot \delta_i^4$
$D_2^3 = \eta \cdot V_2^3$
k=2
k=1

FIG. 2B

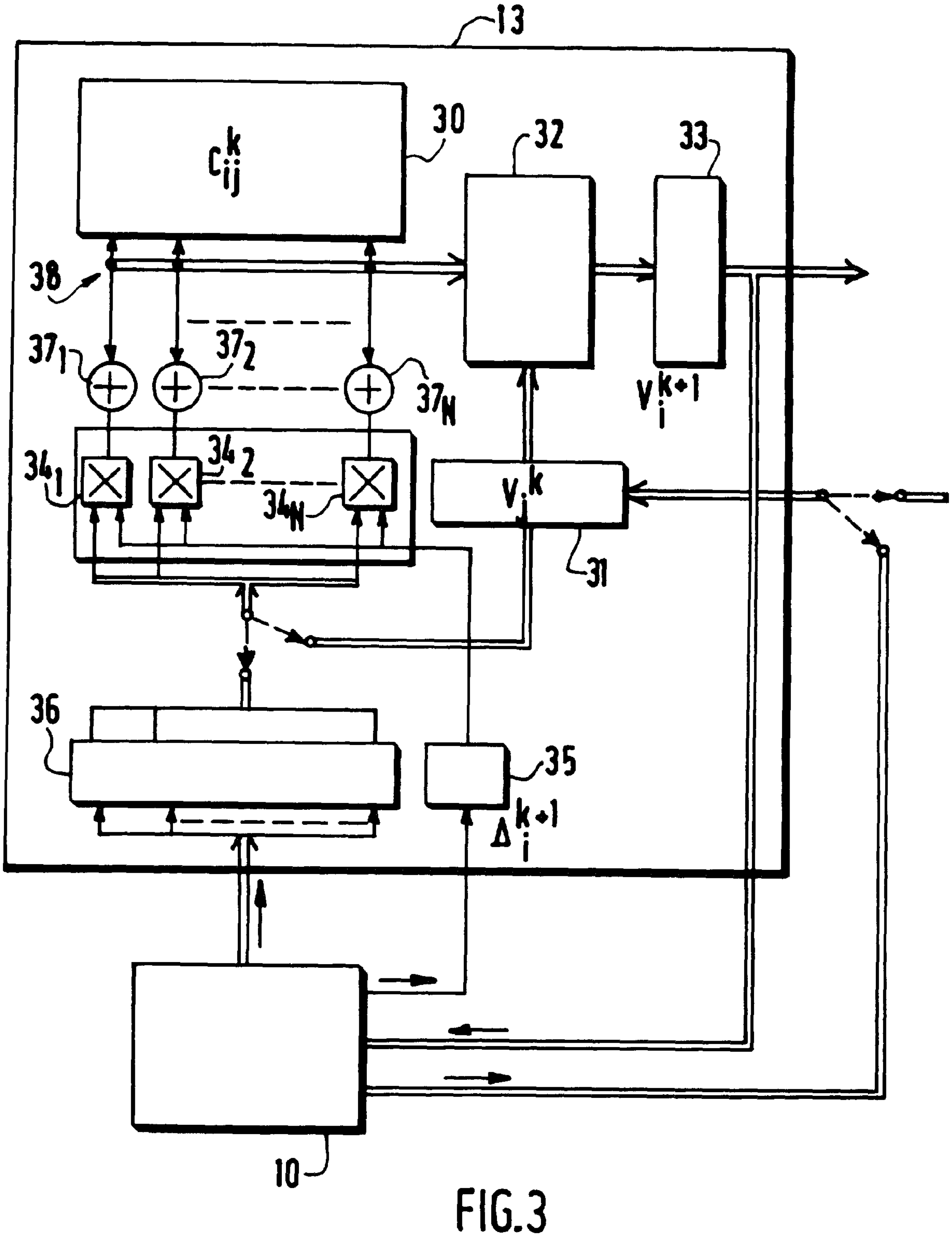
13
30
32
33
38
$C_{ij}^k$
$37_1$
$37_2$
$37_N$
$V_i^{k+1}$
$34_1$
$34_2$
$34_N$
$V_j^k$
31
36
35
$\Delta_i^{k+1}$
10

FIG.3